(19) Europäisches Patentamt
European Patent Office
Office européen des brevets

(11) **EP 3 141 651 B1**

(12) **EUROPEAN PATENT SPECIFICATION**

(45) Date of publication and mention
of the grant of the patent:
**18.09.2019 Bulletin 2019/38**

(51) Int Cl.:
***D06F 39/00*** *(2006.01)*     ***C02F 1/52*** *(2006.01)*
*D06F 39/08* *(2006.01)*     *D06F 35/00* *(2006.01)*

(21) Application number: **14891564.8**

(22) Date of filing: **02.07.2014**

(86) International application number:
**PCT/CN2014/081453**

(87) International publication number:
**WO 2015/168982 (12.11.2015 Gazette 2015/45)**

(54) **METHOD FOR CONTROLLING WATER CIRCULATION AND PROCESSING IN WASHING MACHINE AND WASHING MACHINE**

VERFAHREN ZUR STEUERUNG DER WASSERZIRKULATION UND DER VERARBEITUNG EINER WASCHMASCHINE UND WASCHMASCHINE

PROCÉDÉ DE COMMANDE DE TRAITEMENT ET DE CIRCULATION D'EAU DANS UNE MACHINE À LAVER, ET MACHINE À LAVER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.05.2014 CN 201410192970**

(43) Date of publication of application:
**15.03.2017 Bulletin 2017/11**

(73) Proprietor: **Qingdao Haier Washing Machine Co., Ltd.**
**Shandong 266101 (CN)**

(72) Inventors:
• **SHU, Hai**
**Qingdao**
**Shandong 266101 (CN)**
• **XU, Sheng**
**Qingdao**
**Shandong 266101 (CN)**
• **DENG, Jinzhu**
**Qingdao**
**Shandong 266101 (CN)**
• **LV, Yanfen**
**Qingdao**
**Shandong 266101 (CN)**

(74) Representative: **Ziebig, Marlene et al**
**Ziebig & Hengelhaupt**
**Patentanwälte PartG mbB**
**Leipziger Straße 49**
**10117 Berlin (DE)**

(56) References cited:
**EP-A1- 1 705 156      CN-A- 1 312 409**
**CN-A- 1 465 803      CN-A- 101 935 122**
**CN-Y- 201 258 412      GB-A- 2 343 446**
**JP-A- 2001 054 700      JP-A- 2001 120 890**

**Description**

**FIELD OF THE INVENTION**

The present disclosure relates generally to the field of washing machines, and particularly to a method for circulating water of washing machine, and more particularly to a method for controlling water circulation and a washing machine.

**BACKGROUND OF THE INVENTION**

With improvement of people's living standard, the washing machine has become one of main household appliances in people's daily life, the washing process of the washing machine mainly includes washing, rinsing and spin-dry stages, in the washing stage, water and detergent flood in the washing machine to wash clothes, after the washing machine enters the rinsing stage, in order to rinse stains and residual detergents, it is necessary to take in more water or perform more rinsing times to rinse the clothes, this will definitely consume a large number of water resources, even if it is a water-saving roller washing machine, in order to clean the clothes, the clothes needs to be rinsed at least twice, and such a process will at least consume more than 30 L of running water. Sometimes, there are fewer stains on the clothes or fewer detergents are dispensed into, the clothes may be clean after twice-rinsing, however, as the user selects 3-times rinsing, it will definitely cause a waste of water resources, for example, generally, during twice-rinsing of a 6 Kg full automatic washing machine, about 100 L of water is basically used. How to save water and electricity while the clothes is cleaned is always one of the focuses of consumers.

So far, a water purification and recycling device used in conjunction with a household washing machine has not yet appeared, even if the so-called washing machine with a water saving function, a water storage tank is generally mounted to a side position of the washing position, and a water pump is used for injecting water and draining water, which generally can inject water once and rinse the clothes three times, to play a role of saving water. However, the water after washing cannot be stored; at the same time, the structure of the washing machine is complicated and large, which is not conductive to transportation, recycling and so on. Due to limitations in the volume, structure, flexibility and other aspects, full play of the original function of the washing machine and the function of the water saving tank is affected. On the basis of the existing washing modes, in order to better save the water resources, many manufacturers have invested a lot of research and development.

The existing washing machine has a circulated water function, which merely plays a role of filtering threads, washing evenly or adding ozone, heavy metal ion sterilization and the like. The amount of water consumed cannot be improved, and the cleaning is not improved at all.

Regarding recycling of the laundry water, upon reference, for example, as disclosed in Chinese Patent Application No. 200810072420.5, entitled "water saving device for recycled water of washing machine", the laundry water is dispensed into a water drum for purification treatment. In the disclosure, the first-pass laundry water is directly drained away without purification, and the second-pass and third-pass rinse water, after purification treatment, is left for use in next washing.

In the above technology, the "circulated water technology" is used after the rinse water is purified, the technology cannot recycle the first-pass laundry water (rough cleaning water), and the purified water should be left for use in next washing, but cannot be used in the current washing.

There is another common method of sewage treatment is flocculation method, which uses flocculant in flocculation treatment of sewage contained in sewage water, separate water from sewage water by making sewage into floc. The use of such sewage treatment is high efficiency, low environmental protection, energy saving and low cost. Therefore, the combination of flocculation treatment of sewage and washing machines, the formation of a new cycle of water washing machine has become a new hot spot of invention.

However, since the flocculant served directly to the washing machine water containing drum to process washing water, it can lead to a secondary pollution to clothing caused by flocculant. In addition, it will lead to a poor effect on flocculation if the amount of flocculant being used has a large deviation, the floc particles are too small so it can't be effectively stratified when the amount of flocculant is less, the density of flocculation is greater so it can't be effectively stratified when the amount of flocculant is more, both cases will make the filter net of the filter be seriously blocked, can't drain normal, and difficult to clean up, the final result is that the flocculation process can't be normally carried out.

JP 2001 054700 A discloses a washing machine, which can improve water pollution of surfactants and the like in washing waste water by adding a polymer flocculant to a washing effluent containing contaminants adhering to clothes and a detergent

GB 2 343 446 A describes a process for treating water from household laundry which comprises separating the waste-water which contains organic and/or inorganic soil, contacting the waste-water with flocculants, separating the flocs from the waste-water so as to produce purified water and reusing the water.

In view of the foregoing, the present invention is proposed.

**SUMMARY OF THE INVENTION**

A technical problem to be solved in the present disclosure is to provide a control method for processing circulation water in a washing machine by detecting the water level during flocculation and calculating the dose of flocculant needed, so as to overcome the shortcomings of the prior art.

Another objective of the present disclosure is to provide a washing machine with the control method.

To solve the foregoing technical problem, the basic concept of the technical solution adopted by the present disclosure is:

a control method for processing water circulation in a washing machine comprising, subjecting the washing water of the washing machine drained from the water containing drum to a flocculation treatment and after the flocculation treatment is completed, circulating the treated water for re-use into the water containing drum, wherein, according to an amount of detergent in the washing water, an amount of water intake for washing the clothing, and an amount of water detected in each flocculation treatment, a dose of flocculant is calculated for the water in the flocculation treatment wherein, after washing ends, water is drained to a flocculation container for the flocculation treatment, the amount of water in the flocculation treatment is detected and denoted as L1, the amount of detergent is denoted as M, the amount of water intake for washing is denoted as L, the dose of flocculant for the water in the flocculation treatment is $N1 = aMLI/L$, among them, a is a constant, which is related to the type of detergent and flocculant, after the flocculation treatment is completed, treated water is re-drained into a water containing drum for rinsing.

Further, according to an amount of clothing, the amount of water intake for washing is chosen.

Further, according to the amount of clothing and a dirty degree of clothing, an amount of detergent for washing is calculated.

Further, after a first rinsing is completed, water is drained to the flocculation container for a second flocculation treatment, and an amount of water is detected in the second flocculation treatment. The amount of water is denoted as L2, therefore the dose of flocculant for the water in the flocculation treatment is

$$N2 = (aM(L-L1)/L) + bL2,$$

among them, b is constant, which is related to the type of detergent and flocculant. After the flocculation treatment is completed, treated water is re-drained into the water containing drum for a second rinsing.

Further, after the second rinsing is completed, water is drained to the flocculation container for a third flocculation treatment, a value of $(N1+N2)/aM$ is calculated and compared it with set value t. If the value of $(N1+N2)/aM$ is bigger than t putting fixed dose of flocculant N3 =Nmin, otherwise, putting fixed dose of flocculant N3 =Nmax, which Nmax>Nmin, both Nmin and Nmax are set value.

Further, if multiple rinsing is needed, for the i times flocculation treatment which i≥3, a value of

$$\sum_{i=1} Ni \Big/ aM$$

is calculated, and compared it with set value t. If the value is bigger than t putting fixed dose of flocculant Ni=Nmin, otherwise, putting fixed dose of flocculant Ni=Nmax.

Further, water is drained to the flocculation container after washing ends, and water in a dehydration process is also drained to the flocculation container. The washing machine sets a drying rate of clothing G, the amount of clothing W, and the amount of water intake for washing L=GW +L1, which L1 is the detected amount of water in the first flocculation treatment.

Further, according to a corresponding relationship between a turbidity of washing water detected before each flocculation treatment and the dose of flocculant in the flocculation treatment, compared with a setting data storage of washing machine, a layer height of clear water and turbid water is determined after the flocculation treatment, the clear water is controlled to discharge though detecting flocculation water level after the flocculation treatment.

A washing machine of the present disclosure, comprising a body of the washing machine and a water circulation processing system, wherein, the water circulation processing system comprises a flocculation container which is used for flocculation treatment of water discharged from the body of the washing machine, and flocculation container is provided with a water level detection means.

Further, the flocculation container is provided with a stirring mechanism and a cleaning mechanism for cleaning an inner wall of the flocculation container, the cleaning mechanism comprises a water throwing impeller and a driving motor which drives the water throwing impeller to rotate, the water is thrown into the inner wall of the flocculation container by the water throwing impeller to clean the inner wall of the flocculation container.

Further, the stirring mechanism comprises a stirring motor which is mounted on an external of the flocculation container, a stirring shaft which extends to the inner of the flocculation container and a stirring impeller mounted on the stirring shaft.

Further, the driving motor is the stirring motor, and the water throwing impeller is coaxial mounted on the stirring shaft, and is positioned between the stirring motor and the stirring impeller. The stirring impeller is mounted on a bottom end of the stirring shaft, and the water throwing impeller is mounted on the stirring shaft near the stirring motor. When cleaning the flocculation container with water, the stirring motor drives the water throwing impeller to rotate at a high speed. Due to the centrifugal force acting on the water throwing impeller, the water is thrown onto the inner wall of the flocculation container for cleaning at a certain speed. In order to expand the range of throwing water, the stirring motor is programmed to operate at different stages of speed.

Further, the water circulation processing system in the present disclosure includes a filter container, the flocculated water is filtered by the filter container and recycled and reused.

The flocculation container of the present disclosure is provided with the cleaning mechanism to achieve self-cleaning and increasing automation of the flocculation treatment. It is a novelty design to throw water onto the inner wall of flocculation container to clean it, which can clean fast and broaden the cleaning area. The stirring mechanism and the cleaning mechanism are driven by the same motor, and it simplifies the construction, saves installation space and cuts cost.

After the foregoing technical solution is adopted, the present disclosure has the following beneficial effects compared with the prior art.

By measuring and calculating the amount of washing water and the amount of water per flocculation treatment, the present disclosure can accurately calculate the amount of flocculant to ensure the flocculation efficiency. Further, calculating the height of the flocculation product after stratification using dose of flocculant, using water level measurement can completely stratify the clean water, so that more water can participate in recycling, saving more water, and can avoid the flocculation mixture to the circulation of water.

The present disclosure utilizes a method of measuring the level of flocculation water to accurately calculate the dose of floculant needed with a high accuracy delivery. Then the height of residual flocculation can be controlled precisely when discharging flocculation stratification water. Avoiding the poor effect of flocculation or even a flocculation failure when the error is big and improving the efficiency of flocculation.

## BRIEF DESCRIPTION OF THE DRAWINGS

FIG. 1 is a schematic structural diagram of a washing machine of the present disclosure.

FIG. 2 is a schematic structural diagram of a flocculation container of the washing machine of the present disclosure.

FIG. 3 is a flow chart of the control method of processing circulation water and in the washing machine of the present disclosure.

## DETAILED DESCRIPTION OF THE INVENTION

Specific embodiments of the present disclosure are further described below in detail with reference to the accompanying drawings.

Embodiment 1

The control method for processing water circulation in the washing machine of the present disclosure comprises: subjecting water of the washing machine to a flocculation treatment and then circulating same for reuse, according to the amount of detergent, the amount of water intake for washing, and the amount of water in each flocculation treatment, calculating the dose of flocculant needed for the water in the flocculation treatment.

Wherein, according to the amount of clothing in the washing machine, the amount of water intake for washing is chosen. The amount of water intake can be calculated by detecting the water level with the water level detection means, or can be calculated by an influent flow meter and time. According to the amount of clothing and the dirty degree of clothing, the amount of detergent needed for washing is calculated. The dirty degree of clothing is usually chosen by users. The washing machine is provided with corresponding clothing dirty degree of light, medium and heavy three grades, but not limited to three grades. Or, the washing machine has the function of automatic detection of dirty degree of clothing, this is an existing technology.

Specific, after washing ends, water is drained to a flocculation container for the flocculation treatment, and the amount of water in the flocculation treatment is detected, and denoted as L1, the amount of detergent is denoted as M, the amount of water intake for washing is denoted as L. When the washing water is processed by the flocculation treatment, the amount of flocculant is determined according to the amount of detergent. So when the amount of detergent in the treating water is M, the amount of flocculant is aM. In the present disclosure, the washing water is transferred to the flocculation container for the flocculation treatment, therefore the amount of water changes. According to the amount of water in the flocculation container, the dose of flocculant is N1 = aML1/L, among them, a is constant, which is related to the type of detergent and flocculant. After the flocculation treatment is completed, the treated water is re-drained into a water containing drum for rinsing.

After a first rinsing is completed, water is drained to the flocculation container for a second flocculation treatment. Due to the low concentration of the washing water, the amount of flocculant needs to be adjusted depending on the amount of water in the second flocculation treatment. The amount of water in the second flocculation treatment is detected, and denoted as L2, therefore the dose of flocculant needed for the water in the flocculation treatment is

$$N2 = [aM(L-L1)/L] +$$

$$bL2,$$

among them, b is constant, which is related to the type of detergent and flocculant. After the flocculation treatment is completed, the treated water is re-drained into the water containing drum for a second rinsing.

After the second rinsing is completed, water is drained to the flocculation container for a third flocculation treatment, the value of (N1 +N2) /aM is calculated and compared it with set value t. If the value of (N1+N2) /aM is bigger than t, the fixed dose of flocculant N3=Nmin is put, otherwise, the fixed dose of flocculant N3=Nmax is put, which Nmax>Nmin, both Nmin and Nmax are set value.

In general, after washes clothing, the washing machine defaults to rinsing twice. If multiple rinsing is needed, for the i times flocculation treatment which i$\geq$3, the value of $\sum\limits_{i=1} Ni \Big/ aM$ is calculated, and compared with set value t. If the value is bigger than t, the fixed dose of flocculant Ni=Nmin is put, otherwise, the fixed dose of flocculant Ni=Nmax is put.

Embodiment 2

The difference between the present embodiment and embodiment 1 is: using the weight of laundry and spin-drying rate to reflect the amount of washing water. Weighing the clothing after users put them in, the computer board of the washing machine calculates the dose of detergent needed and proceeds to putting it in the washing machine according to the result of weighing and the dirty degree of the clothes users choose, and then the washing machine washes the clothes after determining the water level according to the weighing result. The above processes are the existing mature technology. Water is drained to the flocculation container after washing ends, and dehydration proceeds after draining ends. The water in the dehydration process is also drained to the flocculation container. Therefore, the washing machine sets the drying rate of clothing G, the amount of clothing W, the amount of water intake for washing L=GW+L1, which L1 is the amount of water in the flocculation container.

For example, the drying rate of clothing which can be adjusted according to different model of washing machine is 60%, here the 60% is just an example. The estimate water in clothing is 0.6W, and the detected amount of water processed in flocculation treatment in flocculation container is L1. Then the dose of flocculant needed for the water to in the flocculation treatment is aML1/ (0.6W+L1), which the 0.6W+L1 is the total amount of water intake during washing process theoretically. Further, the amount of water intake L2can be calculated according to the target water level when the water is inflooded into the water containing drum, compared the result with the calculation of the 0.6W+L1 for comparison or average the two results to reduce error and improve the final calculation accuracy. The above is the first flocculation treatment. After the first rinsing is completed, the second flocculation treatment is proceeding and the dose of flocculant needed is

$$〔aM0.6W/（0.6W+L1）〕＋bL2.$$

Embodiment 3

The present embodiment is to judge the water stratification in the flocculation container after the flocculation treatment. According to the corresponding relationship between the turbidity of washing water detected before each flocculation treatment and the dose of flocculant needed in flocculation treatment, compared with the setting data storage of the washing machine, the layer height of clear water and turbid water is determined after the flocculation treatment. The clean water is controlled to discharge though detecting flocculation water level after the flocculation treatment.

Since the clean water and flocculation layer were separated in standing after flocculation treatment, in which part of the clean water is discharged to recycling, and containing flocculation part is directly discharged. Using the water level detection device in the flocculation container to control the drainage and stop at the flocculation layer. The quantity of the flocculation determines the flocculation layer height, and the quantity of the flocculation mainly is related with the amount of the flocculant and the turbidity of washing water. Through the experiment and the calculation, the corresponding relation is got between the flocculation layer height and the amount of flocculant and the turbidity of washing water, and stored in the computer board of the washing machine. During the process, the flocculation layer height is got by collecting the turbidity of washing water and the dose of flocculant. When the water is discharged to the remaining height, it is considered that the water is discharged completely, and the remaining is the flocculation layer.

Embodiment 4

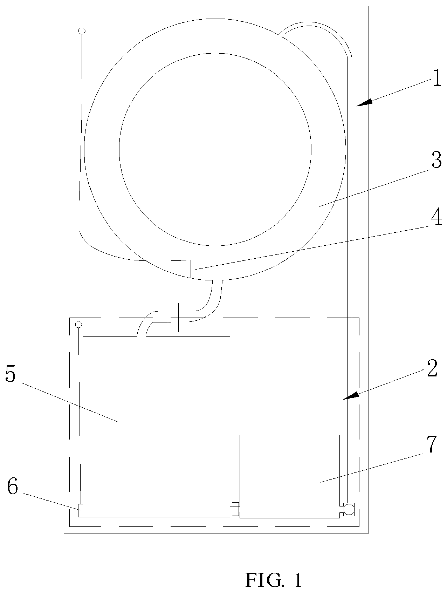

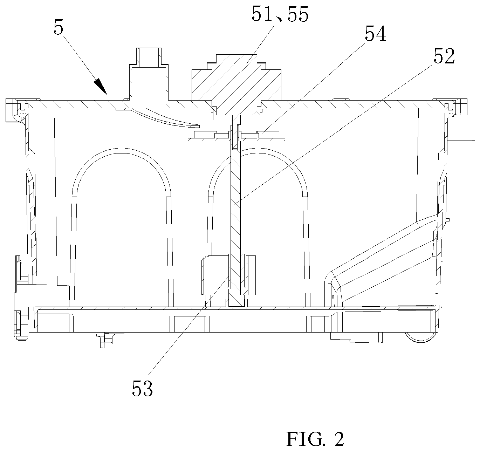

As shown in FIG. 1 and FIG. 2, the washing machine in the present disclosure comprises a washing machine body 1 and a water circulation processing system 2, the washing machine main body 1 needs to have all the parts of an ordinary washing machine, includes a water containing drum 3 for washing, a computer board for controlling washing process and a detergent automatic feeding device (not shown in the FIG). The water containing drum 3 is provided with a washing water level detection means 4 which has the function of weighing or similar to determine the amount of clothing, and the function of the water level sensor or similar to determine the amount of washing water needed for washing. The water circulation processing system 2 comprises a flocculation container 5 which is used for flocculation treatment of washing water with flocculant, and a flocculation water level detection means 6 is provided in the flocculation container 5. Further, the washing machine also includes a filtering container 7 which is used for filtering water processed by the flocculation treatment and other structures such as the pipeline which are connected with the water containing drum, the flocculation container and the filter container, and a control valve and a water draining pump. The flocculation container 5 is provided with a stirring mechanism for mixing water to accelerate the dissolution of the flocculant. The stirring mechanism comprises a stirring motor 51 which is mounted on the external of the flocculation container, a stirring shaft 52 which extends to the inner of the flocculation container and a stirring impeller 53 mounted on the stirring shaft 52. The flocculation container is also provided with a flocculant metering automatic feeding device (not shown in the FIG), so that the flocculant is directly put into the flocculation container.

The flocculation container also provided with a cleaning mechanism for cleaning the inner wall of the flocculation container. The cleaning mechanism comprises a water throwing impeller 54 and a driving motor 55 which drives the impeller 54 to rotate. The water is thrown into the inner wall of the flocculation container by the water throwing impeller 54 to clean the inner wall of the flocculation container 5.

Further, the driving motor 55 is the stirring motor 51, that is, the cleaning mechanism and the stirring mechanism share the same driving motor. The water throwing impeller 54 is coaxial mounted on the stirring shaft 52, and is positioned between the stirring motor 51 and the stirring impeller 53. The stirring impeller 53 is mounted on the bottom end of the stirring shaft 52, and the water throwing impeller 54 is mounted on the stirring shaft 52 close to the position of the stirring motor 51. When using the water to wash the flocculation container, the stirring motor drives the water throwing impeller to rotate at high speed. Due to the centrifugal force acting on the water throwing impeller, the inlet water is thrown onto the inner wall of the flocculation container for cleaning at a certain speed. In order to expand the range of water rejection, the stirring motor be programmed to operate at different stages of speed.

Embodiment 5

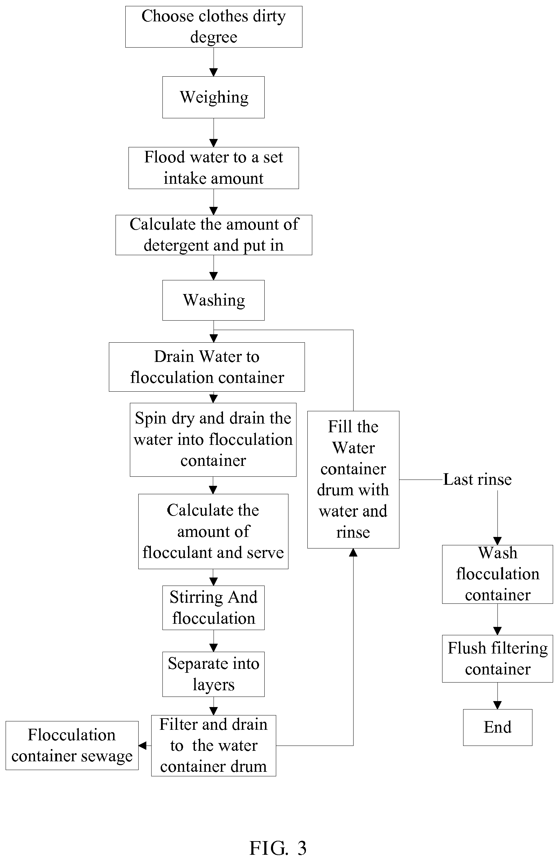

As shown in FIG. 3, the treatment process of washing water of the disclosure is as follows: After washing, the waste water is discharged from the water containing drum into the flocculation container; after the water intake process is over, the stirring motor is started and put the flocculant, so that the flocculant is quickly dissolved and evenly distributed, the flocculations are generated by the reaction; after the stirring motor stopped for a period of time, the flocculation is stratified, and the flocculation floats on the top, and the lower part is clear water; after the stratification is completed, the treated clean water is drained from the bottom of the flocculation container into the filtering container, and not stop draining until a portion containing a large amount of flocculation; after the clean water is further treated through the filtering container, the water is drained back into the tub for rinsing; part of the water containing a large amount of flocculations is discharged directly to the sewer, or the flocculations are collected and treated as solid waste and then discharged.

During rinsing process, users can choose to add water to the water containing drum for rinsing as need. After the first flocculation, the detergent content has been very low, and the water added does not affect the amount of flocculant needed in the flocculation treatment. The dosage of flocculant is calculated according to the method mentioned in the embodiment 1.

After the last rinse, the flocculation container and filtering container can be flushed with rinse water and / or tap water.

The implementation solutions in the above embodiments can be further combined or replaced, and the embodiments merely describe preferred embodiments of the present disclosure, instead of limiting the concept and the scope of the present disclosure; without departing from the design concept of the present disclosure, various variations and improvements made to the technical solutions of the present disclosure by persons skilled in the art all belong to the protection scope of the present disclosure.

**Claims**

1. A control method for processing water circulation in a washing machine comprising, subjecting the washing water of the washing machine drained from the water containing drum (3) to a flocculation treatment and after the flocculation treatment is completed, circulating the treated water for re-use into the water containing drum (3), **characterized in that**, according to an amount of detergent in the washing water, an amount of water intake for washing the clothing, and an amount of water detected in each flocculation treatment, a dose of flocculant is calculated for the water in the flocculation treatment wherein, after washing ends, water is drained to a flocculation container (5) for the flocculation treatment, the amount of water in the flocculation treatment is detected and denoted as L1, the amount of detergent is denoted as M, the amount of water intake for washing is denoted as L, the dose of flocculant for the water in the flocculation treatment is $N1 = aML1/L$, among them, a is a constant, which is related to the type of detergent and flocculant, after the flocculation treatment is completed, treated water is re-drained into a water containing drum (3) for rinsing.

2. The control method for processing water circulation in a washing machine according to claim 1, wherein, the amount of water intake for washing is chosen according to an amount of clothing.

3. The control method for processing water circulation in a washing machine according to claim 1, wherein, the amount of detergent for washing is calculated according to an amount of clothing and the dirty degree of clothing.

4. The control method for processing water circulation in a washing machine according to claim 1, wherein, after a first rinsing is completed, water is drained to the flocculation container (5) for a second flocculation treatment, an amount of water is detected in the second flocculation treatment, and denoted as L2, the dose of flocculant for the water in the flocculation treatment is

$$N2 = (aM(L-L1)/L) + bL2,$$

among them, b is a constant, which is related to the type of detergent and flocculant, after the flocculation treatment is completed, treated water is re-drained into the water containing drum (3) for a second rinsing.

5. The control method for processing water circulation in a washing machine according to claim 4, wherein, after the second rinsing is completed, water is drained to the flocculation container (5) for a third flocculation treatment, a value of $(N1+N2)/aM$ is calculated and compared it with set value t, if the value of $(N1+N2)/aM$ is bigger than t, a fixed dose of flocculant N3 = Nmin is put, otherwise, the fixed dose of flocculant N3=Nmax is put, which Nmax>Nmin, both Nmin and Nmax are set value.

6. The control method for processing water circulation in a washing machine according to claim 5, wherein, if multiple rinsing is needed, for the i times flocculation treatment which i≥3, a value of $\dfrac{\sum\limits_{i=1} Ni}{aM}$ is calculated , and compared it with set value t, if the value $\dfrac{\sum\limits_{i=1} Ni}{aM}$ is bigger than t, put fixed dose of flocculant Ni=Nmin, otherwise, put fixed dose of flocculant Ni= Nmax.

7. The control method for processing water circulation in a washing machine according to claim 2, wherein, water is drained to the flocculation container (5) after washing ends, water in a dehydration process is drained to the flocculation container (5), the washing machine sets a drying rate of clothing G, the amount of clothing W, and the amount of water intake for washing L= GW+L1, which L1 is a detected amount of water in the first flocculation treatment.

8. The control method for processing water circulation in a washing machine according to claim 1, wherein, according to a corresponding relationship between a turbidity of washing water detected before each flocculation treatment and the dose of flocculant in the flocculation treatment, compared with a setting data storage of the washing machine, a layer height of clear water and turbid water is determined after the flocculation treatment, and the clear water is controlled to discharge though detecting flocculation water level after the flocculation treatment.

9. A washing machine configured to implement a control method for processing water circulation according to one of claims 1-8, comprising: a body (1) of the washing machine and a water circulation processing system (2), wherein, the water circulation processing system (2) comprises a flocculation container (5) which is used for flocculation treatment of water discharged from the body (1) of the washing machine, **characterized in that** a water level detection means is provided in the flocculation container (5).

10. The washing machine according to claim 9, wherein, the flocculation container (5) is provided with a stirring mechanism and a cleaning mechanism for cleaning an inner wall of the flocculation container (5), the cleaning mechanism comprises a water throwing impeller (54) and a driving motor (55) which drives the water throwing impeller (54) to rotate, the water is thrown into the inner wall of the flocculation container (5) by the water throwing impeller (54) to clean the inner wall of the flocculation container (5).

11. The washing machine according to claim 10, wherein, the stirring mechanism comprises a stirring motor (51) which is mounted on an external of the flocculation container (5), a stirring shaft (52) which extends to the inner of the flocculation container (5) and a stirring impeller (53) mounted on the stirring shaft (52).

12. The washing machine according to claim 11, wherein, the driving motor (55) is the stirring motor (51), and the water throwing impeller (54) is coaxial mounted on the stirring shaft (52), and is positioned between the stirring motor (51) and the stirring impeller (53).

**Patentansprüche**

1.  Steuerungsverfahren zur Verarbeitung von Wasserzirkulation in einer Waschmaschine, umfassend: Unterziehen des Waschwassers der Waschmaschine, das aus der Wasser enthaltenden Trommel (3) abgelassen wurde, einer Flockungsbehandlung, und nachdem die Flockungsbehandlung abgeschlossen ist, Zirkulieren des behandelten Wassers zur Wiederverwendung in die Wasser enthaltende Trommel (3), **dadurch gekennzeichnet, dass** gemäß einer Menge von Waschmittel in dem Waschwasser, einer Menge von Wassereinlass zum Waschen der Kleidung und einer Menge von Wasser, die bei jeder Flockungsbehandlung ermittelt wurde, eine Flockungsmitteldosis für das Wasser in der Flockungsbehandlung berechnet wird, wobei nach dem Ende des Waschens Wasser in einen Flockungsbehälter (5) für die Flockungsbehandlung abgelassen wird, die Menge von Wasser in der Flockungsbehandlung ermittelt und als L1 bezeichnet wird, die Menge von Waschmittel als M bezeichnet wird, die Menge von Wassereinlass zum Waschen als L bezeichnet wird, die Flockungsmitteldosis für das Wasser in der Flockungsbehandlung Ni = aML1/L beträgt, worunter a eine Konstante ist, die mit der Art von Waschmittel und Flockungsmittel in Beziehung steht, wobei nach Abschluss der Flockungsbehandlung behandeltes Wasser erneut in eine Wasser enthaltende Trommel (3) zum Spülen abgelassen wird.

2.  Steuerungsverfahren zum Verarbeiten von Wasserzirkulation in einer Waschmaschine nach Anspruch 1, wobei die Menge von Wassereinlass zum Waschen gemäß einer Menge von Kleidung gewählt wird.

3.  Steuerungsverfahren zum Verarbeiten von Wasserzirkulation in einer Waschmaschine nach Anspruch 1, wobei die Menge von Waschmittel zum Waschen gemäß einer Menge von Kleidung und dem Verschmutzungsgrad von Kleidung berechnet wird.

4.  Steuerungsverfahren zum Verarbeiten von Wasserzirkulation in einer Waschmaschine nach Anspruch 1, wobei, nachdem ein erstes Spülen abgeschlossen ist, Wasser in den Flockungsbehälter (5) für eine zweite Flockungsbehandlung abgelassen wird, eine Menge von Wasser bei der zweiten Flockungsbehandlung ermittelt und als L2 bezeichnet wird, die Flockungsmitteldosis für das Wasser bei der Flockungsbehandlung N2 = (aM (L - L1) / L) $\pm$ bL2 beträgt, worunter b eine Konstante ist, die mit der Art von Waschmittel und Flockungsmittel in Beziehung steht, und nachdem die Flockungsbehandlung abgeschlossen ist, behandeltes Wasser erneut in die Wasser enthaltende Trommel (3) für ein zweites Spülen abgelassen wird.

5.  Steuerungsverfahren zum Verarbeiten von Wasserzirkulation in einer Waschmaschine nach Anspruch 4, wobei, nachdem das zweite Spülen abgeschlossen ist, Wasser in den Flockungsbehälter (5) für eine dritte Flockungsbehandlung abgelassen wird, ein Wert von (N1 + N2) / aM berechnet und mit dem Sollwert t verglichen wird, wenn der Wert von (N1 + N2) / aM größer als t ist, eine feste Flockungsmitteldosis N3 = Nmin gegeben wird, andernfalls die feste Flockungsmitteldosis N3 = Nmax gegeben wird, wobei Nmax > Nmin und sowohl Nmin als auch Nmax Sollwert sind.

6.  Steuerungsverfahren zum Verarbeiten von Wasserzirkulation in einer Waschmaschine nach Anspruch 5, wobei, wenn mehrfaches Spülen erforderlich ist, für die i-fache Flockungsbehandlung, die i≥3 ist, ein Wert von $\sum_{i=1}^{Ni} / aM$ berechnet wird und mit dem Sollwert t verglichen wird, wenn der Wert $\sum_{i=1}^{Ni} / aM$ größer als t ist, eine feste Flockungsmitteldosis Ni = Nmin gegeben wird, andernfalls eine feste Flockungsmitteldosis Ni = Nmax gegeben wird.

7.  Steuerungsverfahren zum Verarbeiten von Wasserzirkulation in einer Waschmaschine nach Anspruch 2, wobei Wasser in den Flockungsbehälter (5) abgelassen wird, nachdem das Waschen beendet ist, Wasser in einem Dehydrationsprozess in den Flockungsbehälter (5) abgelassen wird, die Waschmaschine eine Trocknungsrate von Kleidung G, die Menge von Kleidung W und die Menge von Wassereinlass zum Waschen L = GW + L1 einstellt, wobei L1 eine ermittelte Menge von Wasser in der ersten Flockungsbehandlung ist.

8.  Steuerungsverfahren zum Verarbeiten von Wasserzirkulation in einer Waschmaschine nach Anspruch 1, wobei gemäß einer entsprechenden Beziehung zwischen einer Trübung des Waschwassers, die vor jeder Flockungsbehandlung ermittelt wurde, und der Dosis von Flockungsmittel in der Flockungsbehandlung, verglichen mit einem Einstelldatenspeicher der Waschmaschine, eine Schichthöhe von klarem Wasser und trübem Wasser nach der Flockungsbehandlung bestimmt wird, und das klare Wasser gesteuert wird, um durch Ermitteln des Flockungswasserpegels nach der Flockungsbehandlung auszutreten.

9.  Waschmaschine, die dazu ausgelegt ist, ein Steuerungsverfahren zum Verarbeiten von Wasserzirkulation nach einem der Ansprüche 1 bis 8 umzusetzen, umfassend: einen Körper (1) der Waschmaschine und ein Wasserzirkulationsverarbeitungssystem (2), wobei das Wasserzirkulationsverarbeitungssystem (2) einen Flockungsbehälter (5) umfasst, der zur Flockungsbehandlung von Wasser verwendet wird, das von dem Körper (1) der Waschmaschine abgegeben wird, **dadurch gekennzeichnet, dass** ein Wasserstandsermittlungsmittel in dem Flockungsbehälter (5) vorgesehen ist.

10. Waschmaschine nach Anspruch 9, wobei der Flockungsbehälter (5) mit einem Rührmechanismus und einem Reinigungsmechanismus zum Reinigen einer Innenwand des Flockungsbehälters (5) versehen ist, wobei der Reinigungsmechanismus ein Wasserschleuderflügelrad (54) und einen Antriebsmotor (55) umfasst, der das Wasserschleuderflügelrad (54) antreibt, sich zu drehen, wobei das Wasser von dem Wasserschleuderflügelrad (54) in die Innenwand des Flockungsbehälters (5) geschleudert wird, um die Innenwand des Flockungsbehälters (5) zu reinigen.

11. Waschmaschine nach Anspruch 10, wobei der Rührmechanismus einen Rührmotor (51), der an einer Außenseite des Flockungsbehälters (5) montiert ist, eine Rührwelle (52), die sich zum Inneren des Flockungsbehälters (5) erstreckt, und ein Rührflügelrad (53), das an der Rührwelle (52) angebracht ist, umfasst.

12. Waschmaschine nach Anspruch 11, wobei der Antriebsmotor (55) der Rührmotor (51) ist und das Wasserschleuderflügelrad (54) koaxial auf der Rührwelle (52) montiert ist und zwischen dem Rührmotor (51) und dem Rührflügelrad (53) positioniert ist.

## Revendications

1. Procédé de commande de la gestion de la circulation de l'eau dans une machine à laver, comprenant les étapes qui consistent à
   soumettre l'eau de lavage de la machine à laver vidangée du tambour contenant de l'eau (3) à un traitement par floculation et, une fois le traitement par floculation terminé, faire circuler l'eau traitée de manière à la réutiliser dans le tambour contenant de l'eau (3), **caractérisé en ce que**, selon une quantité de détergent dans l'eau de lavage, une quantité d'eau introduite pour le lavage des vêtements et une quantité d'eau détectée lors de chaque traitement par floculation, une dose de floculant est calculée pour l'eau soumise au traitement par floculation où, une fois le lavage terminé, l'eau est vidangée dans une cuve de floculation (5) pour le traitement par floculation, la quantité d'eau soumise au traitement par floculation étant détectée et désignée par $L1$, la quantité de détergent étant désignée par $M$, la quantité d'eau introduite pour le lavage étant désignée par $L$, la dose de floculant pour l'eau soumise au traitement par floculation étant $N1 = aML1/L$, où $a$ est une constante qui est liée aux types de détergent et de floculant et, une fois le traitement par floculation terminé, l'eau traitée est vidangée à nouveau dans un tambour contenant de l'eau (3) pour un rinçage.

2. Procédé de commande de la gestion de la circulation de l'eau dans une machine à laver selon la revendication 1, où la quantité d'eau introduite pour le lavage est sélectionnée en fonction d'une quantité de vêtements.

3. Procédé de commande de la gestion de la circulation de l'eau dans une machine à laver selon la revendication 1, où la quantité de détergent utilisée pour le lavage est calculée en fonction d'une quantité de vêtements et du degré de saleté des vêtements.

4. Procédé de commande de la gestion de la circulation de l'eau dans une machine à laver selon la revendication 1 où, une fois un premier rinçage terminé, l'eau est vidangée dans la cuve de floculation (5) pour un deuxième traitement par floculation, une quantité d'eau soumise au deuxième traitement par floculation étant détectée et désignée par $L2$, la dose de floculant pour l'eau soumise au traitement par floculation étant $N2 = [aM(L - L1)/L] \pm bL2$, où $b$ est une constante qui est liée aux types de détergent et de floculant et, une fois le traitement par floculation terminé, l'eau traitée est vidangée à nouveau dans le tambour contenant de l'eau (3) pour un deuxième rinçage.

5. Procédé de commande de la gestion de la circulation de l'eau dans une machine à laver selon la revendication 4 où, une fois le deuxième rinçage terminé, l'eau est vidangée dans la cuve de floculation (5) pour un troisième traitement par floculation, une valeur $(N1 + N2)/aM$ est calculée et comparée à une valeur définie $t$, et une dose fixe de floculant $N3 = Nmin$ est utilisée si la valeur $(N1 + N2)/aM$ est supérieure à $t$ ou sinon une dose fixe de floculant $N3 = Nmax$ est utilisée, où $Nmax > Nmin$ et $Nmin$ et $Nmax$ sont des valeurs définies.

6. Procédé de commande de la gestion de la circulation de l'eau dans une machine à laver selon la revendication 5 où, si de multiples rinçages sont nécessaires pour les nombres $i$ de traitements par floculation et $i \geq 3$, une valeur $\dfrac{\sum_{i=1} Ni}{aM}$ est calculée et comparée à une valeur définie $t$, et une dose fixe de floculant $Ni = Nmin$ est utilisé si la valeur $\dfrac{\sum_{i=1} Ni}{aM}$ est supérieure à $t$ ou sinon une dose fixe de floculant $Ni = Nmax$

est utilisée.

7. Procédé de commande de la gestion de la circulation de l'eau dans une machine à laver selon la revendication 2 où, une fois le lavage terminé, l'eau est vidangée dans la cuve de floculation (5), l'eau dérivée d'un processus d'extraction est vidangée dans la cuve de floculation (5) et la machine à laver définit un taux de séchage des vêtements G, où W est la quantité de vêtements et L = GW + L1 est la quantité d'eau introduite pour le lavage, L1 étant une quantité d'eau détectée lors du premier traitement par floculation.

8. Procédé de commande de la gestion de la circulation de l'eau dans une machine à laver selon la revendication 1 où, selon une relation correspondante entre une turbidité de l'eau de lavage détectée avant chaque traitement par floculation et la dose de floculant utilisée lors du traitement par floculation, comparée aux données de configuration de la machine à laver, une hauteur de la couche d'eau limpide et de la couche d'eau turbide est déterminée après le traitement par floculation et une commande entraîne la vidange de l'eau limpide par le biais de la détection du niveau d'eau de floculation après le traitement par floculation.

9. Machine à laver conçue pour appliquer un procédé de commande de la gestion de la circulation de l'eau selon l'une des revendications 1-8, comprenant : un corps (1) de la machine à laver et un système de gestion de la circulation de l'eau (2), où le système de gestion de la circulation de l'eau (2) comprend une cuve de floculation (5) qui est utilisée pour le traitement par floculation de l'eau vidangée du corps (1) de la machine à laver, **caractérisée en ce qu'**un moyen de détection du niveau d'eau est fourni dans la cuve de floculation (5).

10. Machine à laver selon la revendication 9, où la cuve de floculation (5) est dotée d'un mécanisme d'agitation et d'un mécanisme de nettoyage pour nettoyer une paroi interne de la cuve de floculation (5), le mécanisme de nettoyage comprenant une turbine projetant de l'eau (54) et un moteur d'entraînement (55) qui actionne la rotation de la turbine projetant de l'eau (54), l'eau étant projetée dans la paroi interne de la cuve de floculation (5) par la turbine projetant de l'eau (54) de manière à nettoyer la paroi interne de la cuve de floculation (5).

11. Machine à laver selon la revendication 10, où le mécanisme d'agitation comprend un moteur d'agitation (51) qui est monté sur un extérieur de la cuve de floculation (5), un arbre d'agitation (52) qui se prolonge à l'intérieur de la cuve de floculation (5) et une turbine d'agitation (53) montée sur l'arbre d'agitation (52).

12. Machine à laver selon la revendication 11, où le moteur d'entraînement (55) est le moteur d'agitation (51) et où la turbine projetant de l'eau (54) est montée coaxialement sur l'arbre d'agitation (52) et positionnée entre le moteur d'agitation (51) et la turbine d'agitation (53).

FIG. 1

FIG. 2

```
                    ┌──────────────────────┐
                    │  Choose clothes dirty │
                    │         degree         │
                    └───────────┬──────────┘
                                │
                                ▼
                        ┌──────────────┐
                        │   Weighing    │
                        └───────┬──────┘
                                │
                                ▼
                    ┌──────────────────────┐
                    │  Flood water to a set │
                    │     intake amount      │
                    └───────────┬──────────┘
                                │
                                ▼
                    ┌──────────────────────┐
                    │  Calculate the amount │
                    │   of detergent and    │
                    │        put in          │
                    └───────────┬──────────┘
                                │
                                ▼
                        ┌──────────────┐
                        │   Washing     │
                        └───────┬──────┘
```

Choose clothes dirty degree

Weighing

Flood water to a set intake amount

Calculate the amount of detergent and put in

Washing

Drain Water to flocculation container

Spin dry and drain the water into flocculation container

Calculate the amount of flocculant and serve

Stirring And flocculation

Separate into layers

Flocculation container sewage

Filter and drain to the water container drum

Fill the Water container drum with water and rinse

Last rinse

Wash flocculation container

Flush filtering container

End

FIG. 3

13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200810072420
- JP 2001054700 A
- GB 2343446 A